(19) Europäisches Patentamt

European Patent Office

Office européen des brevets

(11) **EP 0 520 462 B1**

## (12) EUROPEAN PATENT SPECIFICATION

(45) Date of publication and mention
of the grant of the patent:
**15.10.1997 Bulletin 1997/42**

(51) Int Cl.[6]: **G10L 9/14**

(21) Application number: **92110767.8**

(22) Date of filing: **26.06.1992**

(54) **Speech coders based on analysis-by-synthesis techniques**

Auf Analyse-durch-Synthese-Methoden gegründeter Sprachcodierer

Codeurs de parole basés sur des méthodes d'analyse par synthèse

(84) Designated Contracting States:
**AT BE CH DE ES FR GB GR IT LI NL SE**

(30) Priority: **28.06.1991 IT TO910493**

(43) Date of publication of application:
**30.12.1992 Bulletin 1992/53**

(73) Proprietor: **Telecom Italia Mobile S.P.A.**
**10122 Torino (IT)**

(72) Inventors:
• **Drogo de Iacovo, Rosario**
**I-Rocca Imperiale Marina (CS) (IT)**
• **Montagna, Roberto**
**I-Torino (IT)**

(74) Representative:
**Riederer Freiherr von Paar zu Schönau, Anton et al**
**Lederer, Keller & Riederer,**
**Postfach 26 64**
**84010 Landshut (DE)**

(56) References cited:
• **ICASSP'86 (IEEE-IECEJ-ASJ INTERNATIONAL CONFERENCE ON ACOUSTICS, SPEECH, AND SIGNAL PROCESSING, Tokyo, 7th - 11th April 1986), vol. 3, pages 1685-1688, IEEE, New York, US; M. COPPERI et al.: "CELP coding for high-quality speech at 8 kbit/s"**
• **GLOBECOM'90 (IEEE GLOBAL TELECOMMUNICATIONS CONFERENCE AND EXHIBITION, San Diego, California, 2nd - 5th December 1990), vol. 1, pages 518-522, IEEE, New York, US; Y. MAHIEUX et al.: "Transform coding of audio signals at 64kbit/s"**
• **ICASSP'80 (IEEE INTERNATIONAL CONFERENCE ON ACOUSTICS, SPEECH AND SIGNAL PROCESSING, Denver, Colorado, 9th - 11th April 1980), vol. 2, pages 327-331, IEEE, New York, US; M.A. KRASNER: "The critical band coder-digital encoding of speech signals based on the perceptual requirements of the auditory system"**

## Description

The present invention relates to speech signal coding systems, and more particularly it concerns improvements to analysis-by-synthesis speech coders.

It is known that in such coders, for each set of speech signal samples to be coded (frame), the excitation signal for the synthesis filter simulating the vocal apparatus is chosen out of a set of possible excitation signals (groups of pulses, random sequences of white noise, etc.) so as to minimise a perceptually significant distorsion measure: this is commonly obtained by comparison of the synthesized samples and the corresponding samples of the original signal and by simultaneous weighting, in a suitable filter, with a function which takes into account how the human ear evaluates the distorsion introduced.

In its more general form, the synthesis branch comprises a cascade of two filters imposing on the excitation signals the long-term and short-term spectral characteristics, respectively. The second filter has a transfer function depending on linear prediction coefficients $\alpha$, obtained from the input signal by using well known linear prediction techniques. A typical transfer function is of the kind:

$$A(z) = 1 / (1 - \sum_{i=1}^{N} \alpha_i z^{-i})\qquad(1)$$

The weighting filter exploits the fact that human ear is less sensitive to noise in correspondence with the higher energy regions of the speech signal spectrum (formant regions) and is more sensitive to noise in lower energy regions (interformant regions). Such filter shapes the spectrum of the quantization noise, i.e. of the error signal obtained as the difference between the original and the synthesized signals, in such a manner that the noise presents maxima and minima in correspondence with maxima and minima of the speech signal spectrum: in other words, the spectrum of the filtered error signal is a smoothed replica of the speech signal spectrum. To obtain this, transfer functions are used which are obtained from that of the short-term synthesis filter, typically functions of the type:

$$A(z) / A(z / \gamma) = (1 - \sum_{i=1}^{N} \alpha_i z^{-i}) / (1 - \sum_{i=1}^{N} \alpha_i \gamma^i \cdot z^{-i})\qquad(2)$$

Factor $\gamma$ (typically of the order of 0.9) determines the noise quantity tolerated in the formant region. In practice, when using a transfer function like (2), weighting is carried out on both the original and the synthesized signal and not on the error signal: this clearly results in reduction of the overall computations necessary for optimum excitation search, since the series of the short-term synthesis filter and the weighting filter corresponds to a single filter whose transfer function is the denominator of (2).

An example of a conventional spectrally weighting filter is described in ICASSP '86, Tokyo, 7-11 April 1986, vol. 3, pages 1685-1688, IEEE, New York, US, M. Copperi et al.: "CELP coding for high-quality speech at 8 kbit/s", disclosing a CELP coder employing such a filter. Therein, the sampled input signal is split into two separate frequency subbands which are separately encoded in parallel by the following steps: normalizing the signals in amplitude blocks of e.g. 20 samples, resulting in scaled vectors which are compared with codevectors stored in an excitation codebook, and using the indices of those codevectors which provide the subjectively closest reproductions of the speech input blocks, for the transmission to the receiver and for synthesizing a replica of the original signal. The selection of the codevectors is carried out via an error signal which is subjected to frequency weighting, and the choice of the optimum perceptual weighting filter is one of the main problems in the coder design.

The synthesized speech quality obtained by the use of the conventional weighting filters is fairly good, yet it can never exceed a certain limit, since human perception model implicitly contained in those filters is extremely simplified. Actually, such model exploits the qualitative aspect of a phenomenon known as masking between two signals (in the specific case the speech signal and the error signal or noise), namely the fact that the error signal is masked to a greater extent by the speech signal in the higher energy regions; yet complex quantitative aspects exist, which depend on the various frequencies of the speech signal and the corresponding energy values. It is clear that if more precise human perception models were exploited for weighting, higher qualitative levels for the coded signal could be obtained.

The use of more precise human perception models in speech coders has already been suggested, but for completely different aims from error signal weighting.

E.g. the paper "Vector quantization and perceptual criteria in SVD based CELP coders", presented by R. Drogo de Iacovo, R. Montagna and D. Sereno at the International Conference on Acoustics, Speech and Signal Processing ICASSP 90, Albuquerque, USA, 3-6 April 1990, describes an analysis-by-synthesis CELP coder where the short-term synthesis filter is based on the so-called Singular Value Decomposition, and a more accurate model of noise masking by the voice is exploited to select a number of such values. According to the above technique, suitable orthonormal bases are created for the input and output vectors of a filter, which bases are such that, by multiplying the projections of the input signal on its base by the singular values, the projections of the output signal on the other base are obtained. By limiting the number of singular values to be used to build the synthesis filter, e.g. by eliminating those corresponding to the spectrum regions where the masking effect would allow tolerating a greater noise quantity, the quantity of computations necessary to identify the optimum excitation for a frame and, more particularly, the number of bits necessary to identify a word in the codebook, are reduced. Thus a given signal quality can be obtained with a lower number of coding bits. The error signal weighting in the coder described in this memory is carried out by the conventional filter based on relation (2) and it does not exploit the perceptual model found out: on the other hand, implementing by the technique described the noise weighting filter in that coder would be incompatible with implementing the synthesis filter, since each singular value affects noise perceptibility in many spectrum regions and in a different way from region to region.

On the contrary the invention aims to provide a coder in which the weighting filter actually exploits a more precise model of human perception.

More precisely, the invention provides an analysis-by-synthesis digital speech coder, comprising:

- an excitation signal generator, which supplies a set of excitation signals out of which an optimum excitation to be used for coding operations relevant to a group of speech signal samples is chosen;
- a filtering system imposing on the excitation signals the short-term and long-term spectral characteristics of the speech signal and supplying a synthesized speech signal;
- means for carrying out a perceptually significant measurement of the distorsion of the synthesized signal with respect to the original speech signal and for emitting the coded speech signal, such means comprising a filter for spectral weighting of such distorsion,

characterised in that the spectrally weighting filter has a transfer function in which the modulus is represented by the inverse of a global masking threshold of the noise by the speech signal, obtained by the following steps:

- determining a frequency spectrum, comprising a sequence of discrete elements, for each group of speech signal samples;
- computing a partial masking threshold for each element of the spectrum;
- summing the partial thresholds to define the global masking threshold.

Herein, as the difference between the original signal and the synthesized one (error signal or distorsion) is to be filtered or weighted so as to take account of how the human perception treats the error itself, the filtered signal is the perceptually significant measurement of the distorsion.

The discrete elements of the spectrum may be the tone and non-tone components obtained by Fourier analysis of the input signal, or the bands obtained by linear prediction techniques. The partial masking threshold is relevant to a single component or a single band; each of the thresholds contributes to the determination of the global threshold.

In a preferred embodiment, the discrete spectrum is a stepwise linear prediction spectrum, where each step corresponds to a certain band and has a level representing the signal level in that band, and the partial thresholds are calculated for each band.

Preferably the filter is a minimum-phase finite-impulse-response filter.

The invention will be better understood with reference to the annexed drawings, in which:

- Fig. 1 is a general block diagram of an analysis-by-synthesis coder;
- Fig. 2 is a graph of an example of normalised masking threshold used in the invention, and
- Fig. 3 is a graph of noise shaping obtained with the filter in accordance with the invention, based on the normalised masking threshold of Fig. 2, and with a conventional filter, respectively.

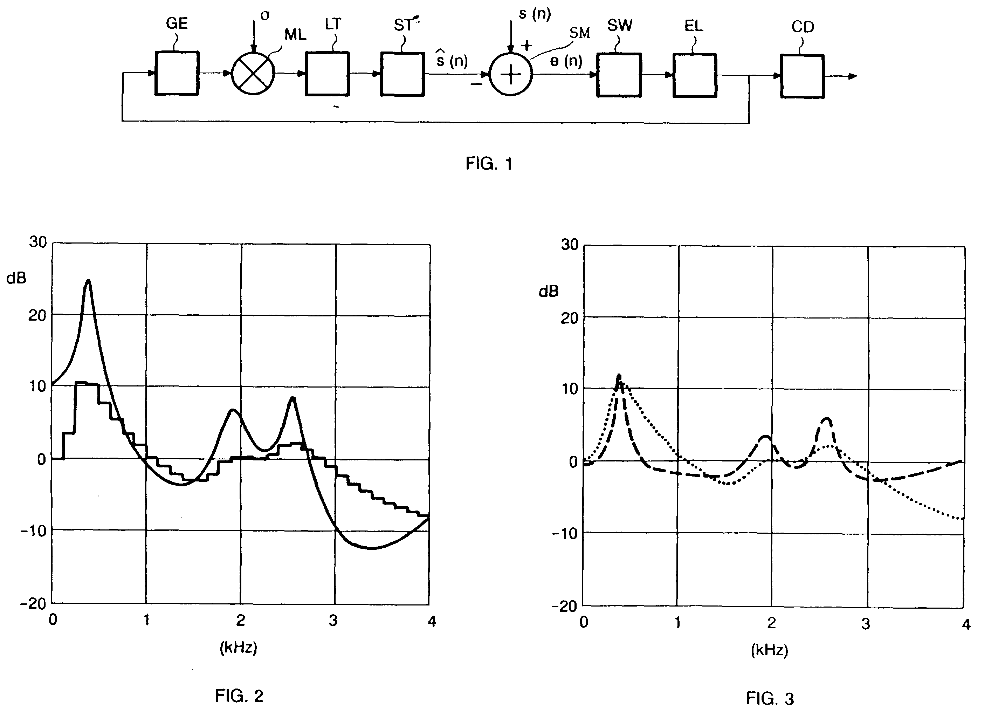

As shown in Fig. 1, an analysis-by-synthesis coder generally comprises: a source GE of excitation signals; a multiplier ML multiplying the signals supplied by the source GE by a scale factor a; a long-term synthesis filter LT, introducing into the excitation signals the characteristics depending on the fine spectral structure of the signal; a short-term synthesis filter ST, which introduces into the excitation signals the characteristics depending on the signal spectral envelope and generates a synthesized signal $\hat{s}(n)$; an adder SM subtracting the synthesized signal from the original signal $s(n)$ and supplying an error signal $e(n)$; a filter SW for the spectral weighting (or shaping) of the error signal; a processing unit EL executing the computations necessary to determine the optimum excitation for a given frame; a

EP 0 520 462 B1

circuit CD for coding information relevant to the optimum excitation signal, the scale factor and the synthesis filter parameters which, together, form the coded speech signal.

In a preferred embodiment of the invention, weighting filter SW basically exploits the model of noise masking by the speech signal used in the coder described in the cited paper. Such a model has been obtained as follows.

First, only the simultaneous masking, i.e. masking between signals present at the same time, has been considered: taking into account that analysis-by-synthesis coders process groups of speech signal samples corresponding to a suitable duration (frames), mutual influences between speech signal and noise relevant to the same frame have been considered, whereas influences between signal and noise belonging to different frames have been neglected. To obtain the masking model, the concept of critical band has also been exploited. That term denotes the bandwidth beyond which the listener response to a complex signal changes. This concept is described in detail in the book: "Foundations of Modern Auditory Theory" edited by J.V. Tobias, Academic Press, New York 1970, and more particularly in the chapter "Critical Bands" by B. Scharf, pages 159 and ff. Besides, the model of noise masking in a critical band by a tone centered in the band itself has been exploited, as described in the paper entitled "Subband Coding of Digital Audio Signals Without Loss of Quality", presented by R.N.J. Veldhuis et al. at the International Conference on Acoustics, Speech and Signal Processing ICASSP 89, Glasgow, 23-26 May 1989, paper A1a8: according to that model, the masking thresholds for the various tones (i. e. the value of signal-to-noise ratio beyond which a tone masks the noise) are represented, as the frequency varies, by a triangular shaped function, identified by the masking level (i.e. the threshold value) within the band and the function slope towards lower and higher frequencies.

For determining a global masking threshold of the quantization noise by the speech signal starting from the above considerations, a number of simplifying hypotheses have been made:

- the speech signal inside each critical band has been considered as a simple tone centered in the band itself, even though actually it is a more complex signal, and hence masking thresholds having the same behaviour as that of a tone have been exploited; the greater signal complexity is taken into account by a simple vertical shift of the threshold;
- the masking threshold for a tone has been considered independent of its amplitude;
- the masking effect has been considered additive.

Starting from these assumptions, the determination of the masking threshold for a speech signal has required the following operations:

- determining a linear prediction spectrum of the speech signal as a sequence of steps of equal width, each step corresponding to a certain band inside the interval 0 to 4 kHz and having a level indicating the normalised level of the signal in that band;
- computing the masking threshold for each band;
- summing the contributions of the individual bands to define the global masking threshold.

The speech signal spectral region from 0 to 4 kHz is of interest for coder applications to telephony. Obviously the finer the signal splitting into bands, the lower the influence of the simplifications made, but the higher the computation burden. The choice of the number of bands will then issue from a compromise between the two conflicting requirements. Tests carried out have demonstrated that the quality achievable with the invention increases, in comparison with the coder using a conventional weighting filter, if the interval considered is subdivided into at least 16, and preferably at least 24 bands. The bands thus obtained do not exactly coincide with the critical bands of the speech signal, as it can be deduced by a comparison with the table reported in the above chapter from "Foundations of Modern Auditory Theory". In case of signal bands comprising more critical bands or encompassing adjacent critical bands, the masking threshold has been built up as a weighted average of the threshold relevant to the individual critical bands; in case of more signal bands falling within a same critical band, the same masking threshold has been used for all signal bands.

Fig. 2 shows the normalised global masking threshold in the case of 32 bands for a signal whose spectrum is indicated by the solid line curve. Normalisation is a scaling of the actual threshold values such which renders the mean value of the function equal to 0, as required for the weighting filter design for theoretical reasons which are well known to the skilled in the art. The values in dB of the steps of the normalised global masking threshold are given in the following table.

4

## TABLE

| | | | |
|---|---|---|---|
| 1 | 0,087832451 | 2 | 3,6881833 |
| 3 | 10,534211 | 4 | 10,392427 |
| 5 | 7,8239479 | 6 | 5,6602249 |
| 7 | 3,7008657 | 8 | 1,9822216 |
| 9 | 0,47780609 | 10 | -0,79929256 |
| 11 | -1,9255447 | 12 | -2,6990604 |
| 13 | -2,8122873 | 14 | -1,7955971 |
| 15 | -0,11292076 | 16 | 0,60469818 |
| 17 | 0,48157597 | 18 | 0,31161690 |
| 19 | 0,89280128 | 20 | 2,1439295 |
| 21 | 2,5287046 | 22 | 1,5923996 |
| 23 | 0,35976315 | 24 | -0,89864922 |
| 25 | -2,1076555 | 26 | -3,2390337 |
| 27 | -4,2808466 | 28 | -5,1981058 |
| 29 | -5,9617891 | 30 | -6,5716543 |
| 31 | -7,1011934 | 32 | -7,7595587 |

Once the global masking threshold is determined, the weighting filter transfer function is obtained by conventional design techniques. More particularly a minimum-phase, finite-impulse-response filter has been implemented. The modalities for obtaining a finite-impulse-response filter with a given modulus are described in the book "Digital signal Processing", by A.V. Oppenheim and R.W. Schafer, Prentice Hall Inc., Pages 353 - 358. Given the masking threshold values. the filter coefficients are univocally determined. It is clear however that a same masking threshold can be implemented with different types of filters.

Fig. 3 shows quantization noise shaping obtained by the conventional filter (dashed line curve) and by the filter in accordance with the invention (dotted line curve) in the considered example of 32 bands, for the spectrum given by way of example in Fig. 2. It is evident that the use of the more precise perception model results in a rather different noise shaping from that obtained with the conventional filter, the differences being mainly represented by the widening in the formant regions and by the different slopes of the various portions of noise spectrum. The more precise shaping results in turn in an enhanced quality of the coded signal: this is intuitive and has been proved by listening tests carried out.

Of course, the error-signal masking by the speech signal used in the weighting filter of the coder according to the invention can exploit perception models different from the one described, e.g. the one used in audio signal coding in accordance with a technique which is being standardised by ISO. That technique is described in the paper "The ISO Audio Coding Standard", presented by H.G. Musman at IEEE Global Telecommunications Conference GLOBECOM '90, San Diego, 2-5 December 1990, paper 405.1. There, the perception model is used to determine optimum bit allocation to the various sub-bands into which the audio signal is split, by exploiting a masking threshold relevant to each sub-band. In addition to the different application, the differences from the described model basically concern spectral analysis of the signal, which exploits a fast Fourier transform of the input signal, instead of linear prediction techniques: after spectral analysis, tone and non-tone spectrum components are extracted (tone component means a component whose power is sufficiently higher than that of the adjacent lines), masking thresholds are computed for the different components and hence the global masking threshold is calculated as the resultant of the masking thresholds of the individual components.

**Claims**

1. An analysis-by-synthesis digital speech coder, comprising:

   - an excitation signal generator (GE), which supplies a set of excitation signals out of which an optimum excitation to be used for coding operations relevant to a group of speech signal samples [s(n)] is chosen:
   - a filtering system (LT, ST) imposing on the excitation signals the short-term and long-term spectral characteristics of the speech signal and supplying a synthesized speech signal [ŝ(n)];
   - means (SM, SW, EL, CD) for carrying out a perceptually significant measurement of the distorsion [e(n)] of the synthesized signal with respect to the original speech signal and for emitting the coded speech signal, such means comprising a filter (SW) for the spectral weighting of such distorsion,

   characterised in that the spectrally weighting filter (SW) has a transfer function in which the modulus is represented by the inverse of a global masking threshold of the noise by the speech signal, obtained by the following steps:

   - determining a frequency spectrum, comprising a sequence of discrete elements, for each group of speech signal samples [s(n)];
   - computing a partial masking threshold for each element of the spectrum;
   - summing the partial thresholds to define the global masking threshold.

2. A coder as claimed in claim 1, characterised in that said discrete spectrum is a stepwise linear prediction spectrum, each step corresponding to a certain band and having a level representing the signal level in that band, and the partial thresholds are computed for each band.

3. A coder as claimed in claim 2, characterised in that the linear prediction spectrum used comprises at least 16, and preferably at least 24 steps.

4. A coder as claimed in claim 3, characterised in that the linear prediction spectrum used comprises 32 steps.

5. A coder as claimed in any preceding claim, characterised in that said filter is a minimum-phase finite-impulse-response filter.

**Patentansprüche**

1. Digitaler Sprachcodierer auf Analyse-durch-Synthese-Basis, umfassend:

   - einen Erregungssignalgenerator (GE), der eine Gruppe von Erregungssignalen liefert, aus der eine für Codieroperationen bezüglich einer Gruppe von Sprechsignale-Abtastwerten [s(n)] zu verwendende optimale Erregung ausgewählt wird;
   - ein Filtersystem (LT, ST), das den Erregungssignalen die Kurzzeit- und die Langzeit-Spektralcharakteristiken des Sprechsignals aufprägt und ein synthetisiertes Sprechsignal [ŝ(n)] liefert;
   - eine Einrichtung (SM, SW, EL, CD) zur Durchführung einer wahrnehmungsmäßig beachtlichen Messung der Verzerrung [e(n)] des synthetisierten Signals in Bezug zum ursprünglichen Sprechsignal und zum Emittieren des codierten Sprechsignals, wobei diese Einrichtung ein Filter (SW) für die spektrale Gewichtung dieser Verzerrung umfaßt,

   dadurch gekennzeichnet, daß das spektral gewichtenden Filter (SW) eine Transferfunktion aufweist, in der der Modul durch den Kehrwert einer globalen Maskierschwelle des Rauschens durch das Sprechsignal wiedergegeben wird, die erhalten wird durch die folgenden Schritte:

   - Bestimmen eines Frequenzspektrums, das eine Folge von diskreten Elementen umfaßt, für jede Gruppe von Sprechsignal-Abtastwerten [s(n)];
   - Berechnen einer partiellen Maskierschwelle für jedes Element des Spektrums;
   - Summieren der partiellen Schwellen zur Bestimmung der globalen Maskierschwelle.

2. Codierer nach Anspruch 1, dadurch gekennzeichnet, daß das diskrete Spektrum ein stufenweises lineares Vorhersagespektrum ist, jede Stufe einem bestimmten Band entspricht und eine Höhe hat, die den Signalpegel in diesem Band wiedergibt, und die partiellen Schwellen für jedes Band berechnet werden.

3. Codierer nach Anspruch 2, dadurch gekennzeichnet, daß das verwendete lineare Vorhersagespektrum wenigstens 16 und vorzugsweise wenigstens 24 Stufen umfaßt.

4. Codierer nach Anspruch 3, dadurch gekennzeichnet, -daß das verwendete lineare Vorhersagespektrum 32 Stufen umfaßt.

5. Codierer nach einem der vorhergehenden Ansprüche, dadurch gekennzeichnet, daß das Filter ein Minimumphasenfilter mit endlicher Impulsantwort ist.

**Revendications**

1. Codeur numérique de la parole basé sur l'analyse par synthèse, comprenant:

   - un générateur de signaux d'excitation (GE) qui fournit un ensemble de signaux d'excitation parmi lesquels on choisit une excitation optimale à utiliser pour les opérations de codage relatives à un groupe d'échantillons [s(n)] du signal de parole;
   - un système de filtrage (LT, ST) qui impose aux signaux d'excitation les caractéristiques spectrale à court terme et à long terme du signal de parole et qui fournit un signal de parole synthétisé [$\hat{s}(n)$];
   - des moyens (SM, SW, EL, CD) pour effectuer une mesure significative du point de vue perceptif de la distorsion [e(n)] du signal synthétisé par rapport au signal de parole original et pour émettre le signal de parole codé, ces moyens comprenant un filtre (SW) pour la pondération spectrale de cette distorsion,

   caractérisé en ce que le filtre (SW) de pondération spectrale a une fonction de transfert dont le module est représenté par l'inverse d'un seuil de masquage global du bruit par le signal de parole, obtenu par les opérations suivantes:

   - détermination d'un spectre de fréquence, comprenant une séquence d'éléments discrets, pour chaque groupe d'échantillons [s(n)] du signal de parole ;
   - calcul d'un seuil de masquage partiel pour chaque élément du spectre;
   - somme des seuils partiels pour définir le seuil de masquage global.

2. Codeur selon la revendication 1, caractérisé en ce que le spectre discret est un spectre de prédiction linéaire en échelons, chaque échelon correspondant à une certaine bande et ayant un niveau représentant le niveau du signal dans cette bande, et les seuil partiels sont calculés pour chaque bande.

3. Codeur selon la revendication 2, caractérisé en ce que le spectre de prédiction linéaire utilisé comporte au moins 16 échelons, et de préférence au moins 24 échelons.

4. Codeur selon la revendication 3, caractérisé en ce que le spectre de prédiction linéaire utilisé comporte 32 échelons.

5. Codeur selon l'une quelconque des revendications précédentes, caractérisé en ce que le filtre est un filtre à réponse impulsionnelle finie et à phase minimale.

FIG. 1

FIG. 2

FIG. 3